(19) Europäisches Patentamt
European Patent Office
Office européen des brevets

(11) **EP 1 954 544 B1**

(12) **FASCICULE DE BREVET EUROPEEN**

(45) Date de publication et mention
de la délivrance du brevet:
**22.09.2010 Bulletin 2010/38**

(51) Int Cl.:
**B61K 9/12** *(2006.01)*   **G01M 17/10** *(2006.01)*
**G01B 7/28** *(2006.01)*

(21) Numéro de dépôt: **06841818.5**

(22) Date de dépôt: **29.11.2006**

(86) Numéro de dépôt international:
**PCT/FR2006/002605**

(87) Numéro de publication internationale:
**WO 2007/063209 (07.06.2007 Gazette 2007/23)**

(54) **PROCEDE ET DISPOSITIF DE DETECTION DE DEFAUTS DE CIRCULARITE DE ROUES DE MATERIEL FERROVIAIRE ET SYSTEME COMPRENANT UN TEL DISPOSITIF**

VERFAHREN UND VORRICHTUNG ZUR ENTDECKUNG VON FEHLERN IN DER RUNDHEIT VON EISENBAHNRÄDERN UND SYSTEM MIT EINER SOLCHEN VORRICHTUNG

METHOD AND DEVICE FOR THE DETECTION OF FAULTS IN THE ROUNDNESS OF WHEELS OF RAILWAY STOCK, AND SYSTEM COMPRISING ONE SUCH DEVICE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **29.11.2005 FR 0512098**

(43) Date de publication de la demande:
**13.08.2008 Bulletin 2008/33**

(73) Titulaire: **GANTHA**
**86000 Poitiers (FR)**

(72) Inventeur: **COSTE, Olivier**
**F-86000 Poitiers (FR)**

(74) Mandataire: **Thibon-Littaye, Annick et al**
**Cabinet THIBON-LITTAYE**
**BP 19**
**78164 Marly-le-Roi (FR)**

(56) Documents cités:
EP-A- 1 207 091   WO-A-00/73118
WO-A-87/06203   DE-A1- 3 309 908
DE-A1- 4 439 342   DE-A1- 19 804 566
DE-B- 1 170 445   DE-B- 1 267 700
JP-A- 58 155 303   US-A- 4 702 104

**Description**

L'invention concerne un procédé et un dispositif de détection de défauts de circularité de roues de matériel ferroviaire. Elle concerne également un système comprenant un tel dispositif.

Dans le cadre de la présente invention, le terme "matériel ferroviaire" doit être compris dans son acceptation la plus générale : voitures de transport de passagers ou wagons de fret pour les chemins de fer, tramway, etc. De même, le terme "roues" englobe les roues proprement dites, mais aussi tout organe similaire en contact avec un rail et roulant sur celui-ci, par exemple un galet cylindrique.

Pour fixer les idées, l'invention trouvant une application particulièrement avantageuse, bien que non exhaustive, pour la détection de défauts de circularité des roues d'une rame de train du type dit "TGV" en France (sigle dérivée de "Train à Grande Vitesse", marque déposée appartenant à la SNCF), ou de celles d'un matériel similaire dans d'autres pays, on se placera dans ce qui suit dans le cadre de cette application préférée.

Dans le cadre des applications rappelées et notamment de l'application préférée, il est bien connu que les roues, au fil du temps, finissent par présenter des défauts de circularité de différentes natures et d'importances plus ou moins marquées. Les raisons en sont multiples : chocs, freinages d'urgence, etc., qui entraînent des usures inégalement réparties sur la circonférence des roues.

Les défauts précités se répartissent en deux catégories principales : défauts localisés (écaillages, apports de matière, méplats dus à des freinages d'urgence, notamment pour le matériel de transport de fret, etc.) ou au contraire défauts généralisés. Dans ce dernier cas, la roue n'est alors plus ronde et on assiste à un phénomène dit de "polygonisation" de la roue.

Ces défauts engendrent des vibrations dans l'ensemble des organes de roulement. Ces vibrations sont notamment responsables d'un vieillissement prématuré des organes de roulement.

De façon classique, pour remédier à ces défauts, les exploitants sont obligés de ramener le matériel ferroviaire en atelier, de l'inspecter, puis de meuler les roues.

A titre d'exemple, dans le cas de l'application préférée rappelée ci-dessus, pour effectuer la maintenance précitée, il est nécessaire de ramener les rames de "TGV" concernées en atelier pour meuler les roues, ce qui suppose, outre l'immobilisation de ces rames, de les soulever et de recourir à une main d'oeuvre qualifiée. Ces procédures entraînent donc des immobilisations de trains ainsi que des meulages de roues qui sont quelques fois non justifiés ou, au contraire, dans certains cas trop tardifs. En effet, plus le défaut est détecté tôt, plus la quantité de matière enlevée est faible.

Cette maintenance est basée sur des critères, soit de durée maximale de service du matériel roulant, soit de kilométrage maximum prédéterminé effectué par celui-ci. Dans tous les cas cette opération de maintenance quasi-systématique est coûteuse. En outre, la durée de vie des roues décroît fortement, du fait des meulages répétés, dont certains, comme il vient d'être rappelé, ne se justifient pas, ce qui renchérit le processus.

Le besoin se fait donc sentir de disposer d'informations permettant d'éviter des rectifications inutiles en effectuant une détection automatique des défauts *in situ,* c'est-à-dire en temps réel lors du passage des trains, de façon plus générale du matériel ferroviaire, sur une portion de voie prédéterminée. De façon préférentielle, ce tronçon dédié à la détection des défauts est situé sur un trajet "de routine", les mesures effectuées n'ayant aucune incidence sur la conduite du train.

Pour ce faire, on pourrait penser pouvoir utiliser les vibrations qui sont produites par le passage des rames lors du passage des trains et qui se propageant dans les rails. On sait en effet, depuis que les transports par chemin de fer existent, que l'on peut détecter à grande distance l'arrivée d'un train en détectant l'apparition de vibrations transmises par les rails, ne serait-ce qu'en posant son oreille sur celles-ci.

En effet, d'un point de vue mécanique, un rail peut être modélisé, en première approximation, par une poutre de longueur infinie. Cette propriété impliquant une propagation des vibrations indéfinie et sans réflexion, cela impliquerait donc que le moindre choc, causé par une roue non parfaitement circulaire, c'est-à-dire présentant l'un des défauts signalés, génère des vibrations qui se propageront très loin et très longtemps.

En utilisant des capteurs appropriés, on pourrait penser pouvoir isoler les seules vibrations associées aux défauts à détecter, ce qui permettrait de mettre en évidence des roues défectueuses et seulement ces roues. Cependant, il est difficile de différencier, lors du passage d'une rame, *a fortiori* d'un train comprenant plusieurs rames, les roues défectueuses des roues "saines". L'expérience a montré que les vibrations produites par les défauts de circularité de roue sont confuses et, par conséquent, difficilement exploitables. En outre, on constate que même les roues sans défaut produisent des chocs latéraux sur les rails, que l'on peut qualifier de normaux mais qui sont de nature à perturber les mesures effectuées.

On a proposé, dans l'Art connu, un certain nombre de procédés et dispositifs basés sur la détection sélective et en temps réel des efforts ou des vibrations générés au passage des rames de train. On peut citer, à titre d'exemples non limitatifs, des capteurs à base de jauges de contraintes collées sur les rails ou mettant en oeuvre des lasers détectant les vibrations des rails. Cependant, ces capteurs se sont révélés d'un usage peu fiable. En outre, ils sont de mise en oeuvre complexe et ils sont coûteux et/ou peu robustes.

Le Titulaire de la présente demande de brevet a pu déterminer que la modélisation des rails de chemins de fer ou installations similaires, telle qu'elle vient d'être rappelée, ne constituait en réalité qu'une approximation valable dans une gamme de fréquences limitée. Lorsque l'on s'intéresse à certaines gammes de fréquences particulières, il a été déterminé, de façon surprenante, que les rails ne se comportent plus comme des "poutres infinies", mais qu'ils peuvent être modélisés par des combinaisons de type "masses-ressorts-amortisseurs".

Pour ces fréquences, l'énergie produite par les vibrations, pour l'essentiel, est transmise aux traverses ou organes similaires supportant les rails et elle est absorbée localement par celles-ci. Elles ne se propagent donc plus sur de longues distances.

En outre, les voies de chemin de fer présentent un comportement vibratoire différent des unes aux autres, qui dépend de nombreux critères physiques, notamment de la forme (section) du rail, de la composition de l'acier les constituant, et du mode de pose de la voie (traverse, semelle, ballast, etc.).

L'invention tire parti de ces caractéristiques comme il va l'être montré ci-après.

DE-A-3309 908 représente l'état de la technique le plus pertinent, selon les caractéristiques de la partie caractérisante de la revendication indépendante 1.

L'invention vise à satisfaire les besoins qui se font sentir en matière de détection en temps réel de défauts de circularité de roues de matériel ferroviaire ou similaire, tout en palliant les inconvénients des procédés et dispositifs de l'Art connu, et dont certains viennent d'être rappelés. Elle se fixe pour but de proposer un procédé et un dispositif de détection de défauts de circularité de roues en temps réel, c'est-à-dire lors du passage d'un matériel ferroviaire sur un tronçon de voie dit instrumenté, qui est équipé de ce dispositif. Elle se fixe encore comme but de proposer un système comprenant un tel dispositif.

Pour ce faire, lors d'une phase initiale, selon une première caractéristique importante du procédé selon l'invention, connaissant ou mesurant le taux de décroissance, en fonction de la fréquence, de l'amplitude de vibrations produites par un matériel ferroviaire déterminé, dans des rails sur lesquels circule un matériel roulant déterminé, on sélectionne une bande de fréquences de ces vibrations présentant une atténuation maximale.

Lors d'étapes ultérieures, séquentielles et/ou combinatoires, dans une phase du procédé dite "opérationnelle", les amplitudes des vibrations produites par le passage d'un matériel roulant sur un tronçon de voie instrumenté sont mesurées par acquisition de signaux analogiques représentatifs de ces vibrations. On procède également à l'acquisition de signaux analogiques de synchronisation et à une numérisation synchrone des deux séries de signaux analogiques, de façon à obtenir des mesures de vibration corrélées avec le passage des roues. Les signaux analogiques vibratoires acquis et numérisés sont filtrés à l'aide d'un filtre passe-bande pour ne retenir que ceux subsistant dans la bande de fréquences à atténuation maximale, de façon à détecter sélectivement la présence éventuelle d'une ou plusieurs roues présentant des défauts de circularité et à identifier ces roues sans ambiguïté.

En effet, les vibrations présentant des caractéristiques particulières dans cette bande de fréquences par comparaison à des valeurs pré-établies sont caractéristiques de la présence de défauts de circularité sur une roue et leur mise en évidence permet de distinguer la roue en question des roues "saines". Un filtrage optimisé permet d'éviter qu'un défaut présenté par une roue donnée interfère avec la détection d'un défaut sur une autre roue.

Le dispositif de mise en oeuvre du procédé comporte un nombre déterminé de capteurs, préférentiellement à base d'accéléromètres piézo-électriques, pour l'acquisition de premiers signaux analogiques représentatifs des amplitudes des vibrations dans ladite bande de fréquences d'atténuation maximale, chaque capteur étant disposé entre deux traverses successives ou organes similaires de la voie de roulement. Le nombre de capteurs est en corrélation directe d'une part avec la longueur du tronçon instrumentalisé, et donc avec le nombre de traverses qu'il comporte, et d'autre part avec la longueur du développement circonférentiel des roues. Il est ainsi choisi de façon à pouvoir diviser ces roues en secteurs contigus et à associer au moins un capteur à chacun de ces secteurs.

Dans un mode de réalisation préféré suivant l'invention, on prévoit un organe d'assujettissement des capteurs aux rails qui ne nécessite aucune modification significative des voies, notamment aucune intervention (perçage, soudure, etc.) sur les rails.

Dans un mode de réalisation préféré toujours, la mesure desdites vibrations est obtenue en fixant lesdits accéléromètres sous les rails de la voie de roulement et en mesurant les accélérations suivant un axe de symétrie vertical.

Selon encore une autre caractéristique importante dans la mise en oeuvre de l'invention, pour réaliser ladite synchronisation, on prévoit un dispositif de génération d'un top de synchronisation de début de détection, au passage d'une roue donnée, et de mesure de la vitesse du matériel roulant sur la voie, préférentiellement à base de deux capteurs inductifs pour l'acquisition de signaux analogiques de synchronisation. Ces capteurs sont placés de part et d'autre du tronçon de voie dédié à la détection de défauts de circularité, c'est-à-dire de part et d'autre de la série de capteurs d'accélération.

On prévoit également un dispositif de numérisation synchrone des signaux vibratoires et de synchronisation.

Selon une autre caractéristique encore de l'invention, ledit filtrage est obtenu à l'aide d'un filtre numérique passe-bande, avantageusement du type dit à caractéristiques elliptiques.

Selon une autre caractéristique de l'invention, on détermine un premier indicateur en calculant la valeur maximale des niveaux d'énergie vibratoire mesurés par l'ensemble des capteurs. Cet indicateur est représentatif de l'amplitude des défauts de circularité, ci-après dénommée "déformation totale dt".

Selon une autre caractéristique encore, on détermine un second indicateur en calculant la valeur maximale et la valeur minimale des niveaux d'énergie vibratoire mesurés ainsi que la différence de ces deux valeurs et en divisant cette différence par la valeur maximale des niveaux d'énergies mesurés. Cet indicateur est représentatif de la nature des défauts pour un matériel roulant déterminé.

Le procédé et le dispositif de détection de défauts de circularité de roues suivant l'invention, opérant *in situ,* c'est-à-dire en temps réel lors du passage d'un matériel ferroviaire, présente de nombreux avantages. Outre ceux déjà rappelés, on peut citer notamment; pour un exploitant, les avantages suivants :

- baisse des coûts de maintenance préventive ;
- baisse des coûts de maintenance curative ;
- baisse des coûts d'indisponibilité du matériel roulant ;
- optimisation du parc de rechange des roues.

L'invention a donc pour objet principal un procédé de détection de défaut de circularité de roue au passage d'un matériel ferroviaire circulant avec une vitesse déterminée sur une voie ferrée comprenant au moins un rail reposant sur des traverses supports, ledit matériel ferroviaire comprenant au moins une roue en contact avec ledit rail et induisant dans ce rail des vibrations lors dudit passage, lesdites vibrations étant substantiellement absorbées par lesdites traverses dans un spectre de fréquences déterminé,
caractérisé en ce qu'il comprend :

- une phase initiale pendant laquelle le comportement vibratoire d'un
  tronçon de la voie dit instrumenté est déterminé et une bande de fréquences de vibration présentant une atténuation maximale desdites
  vibrations est sélectionnée ;

- une phase subséquente, dite opérationnelle, comprenant au moins les étapes suivantes :

- une étape d'acquisition d'une première série de signaux analogiques représentant l'amplitude desdites vibrations induites par chaque roue, à l'aide de premiers capteurs répartis le long dudit tronçon de voie instrumenté ;

- une étape d'acquisition d'une seconde série de signaux analogiques à l'aide de seconds capteurs, de manière à générer des signaux de synchronisation au passage de chaque roue en un endroit prédéterminé dudit tronçon de voie instrumenté ;

- une étape de numérisation synchrone desdites deux séries de signaux analogiques, de manière à déterminer à chaque instant la position de chaque roue par rapport à chacun desdits premiers capteurs ;

- une étape de filtrage de ladite première série de signaux après numérisation à l'aide d'un filtre passe-bande numérique, de manière à ne retenir que les signaux associés à des vibrations de fréquences comprises dans ladite bande d'atténuation maximale ;

- et une étape de traitement desdits signaux représentant des vibrations, acquis, numérisés et filtrés, de manière à déterminer la présence desdits défauts de circularité de roue par comparaison avec des valeurs préétablies d'amplitudes de vibration.

L'invention a aussi pour objet un dispositif pour la mise en oeuvre du procédé ainsi défini, caractérisé en ce qu'il comporte des moyens propres à la mise en oeuvre automatique de chacune des étapes de ce procédé.

L'invention a encore pour objet un système de mesure informatisé comprenant au moins un tel dispositif.

L'invention va maintenant être décrite de façon plus détaillée en se référant aux dessins annexés, parmi lesquels :

- la figure 1 est une courbe illustrant schématiquement un exemple typique d'atténuation de l'amplitude de vibration se propageant dans des rails de chemin de fer en fonction de la fréquence et mettant en évidence une bande de fréquences d'atténuation maximale;

- la figure 2A illustre schématiquement la génération de fenêtres de temps en corrélation avec le passage de roues sur un rail, effectuée en recourant à des capteurs inductifs, selon une des caractéristiques du procédé de l'invention ;

- la figure 2B illustre très schématiquement les signaux temporels générés en sortie de capteurs d'accélération disposés entre des traverses supportant le rail, suite à l'apparition de vibrations produites par le passage des roues sur ce rail ;

- la figure 2C illustre très schématiquement les signaux associés à chacune des roues ;

- la figure 3 illustre schématiquement un dispositif pour la mise en oeuvre du procédé selon un mode de réalisation préféré de l'invention ;

- la figure 4A illustre schématiquement le mouvement d'une roue effectuant sur un rail un tour complet autour de son axe et la figure 4B illustre la division de cette roue en secteurs, en fonction du développement de cette roue et du nombre desdits capteurs d'accélération ;

- la figure 5 illustre un exemple de réalisation pratique d'un capteur d'accélération utilisé dans le dispositif de la figure 3 et de son support, selon un mode de réalisation préféré de l'invention ;

- la figure 6 illustre schématiquement un exemple de réalisation d'un dispositif complet de détection de défauts de circularité de roues appliqué aux trains de type dit "TGV" (marque déposée) ;

- la figure 7 illustre schématiquement un système informatisé comprenant au moins un dispositif conforme aux figures 3 ou 6 ;

- et la figure 8 représente une courbe illustrant un exemple de dérive en fonction du temps de la déformation totale de circularité d'une roue donnée jusqu'à un seuil d'intervention pour maintenance.

Dans ce qui suit, sans en limiter en quoi que ce soit la portée, on se placera dans le cadre de l'application préférée de l'invention, sauf mention contraire, c'est-à-dire dans le cas de la détection de défauts de circularité de roues de matériel ferroviaire, et plus spécifiquement des roues de rames de trains de type dit "TGV".

Dans les figures, les éléments communs portent les mêmes références et ils ne seront re-décrits qu'en tant que de besoin.

Comme il a été précédemment rappelé, les voies de chemin de fer présentent un comportement vibratoire différent entre les unes et les autres, qui dépend de nombreux critères physiques, notamment la forme (section) du rail, la composition de l'acier les constituant, et le mode de pose de voie (traverse, semelle, ballast, etc.). Dans un but de simplification, dans ce qui suit on n'utilisera, de façon générique, que le terme de "traverse". Comme il a été rappelé également, l'essentiel de l'énergie vibratoire dans une gamme particulière de fréquences est absorbé localement par ces traverses. On comprend aisément que le comportement vibratoire des rails dépend aussi de la matière constituant les traverses : bois, béton, métal, etc.

Il est donc important de connaître ce comportement vibratoire et, plus précisément, selon une des caractéristiques importantes du procédé de l'invention, de connaître l'atténuation des vibrations en fonction de la fréquence.

L'atténuation vibratoire dans un rail peut être connue *a priori* (par exemple par le calcul au moment de la conception de la voie) ou mesurée de façon expérimentale sur le site d'implantation par une campagne expérimentale, du type dit "d'essais au marteau", opérations qui consistent à frapper le rail à l'aide d'un engin approprié pour mesurer la force injectée dans le rail, les caractéristiques fréquentielles et l'amplitude des vibrations qui se propagent à l'aide d'appareils de mesure classiques.

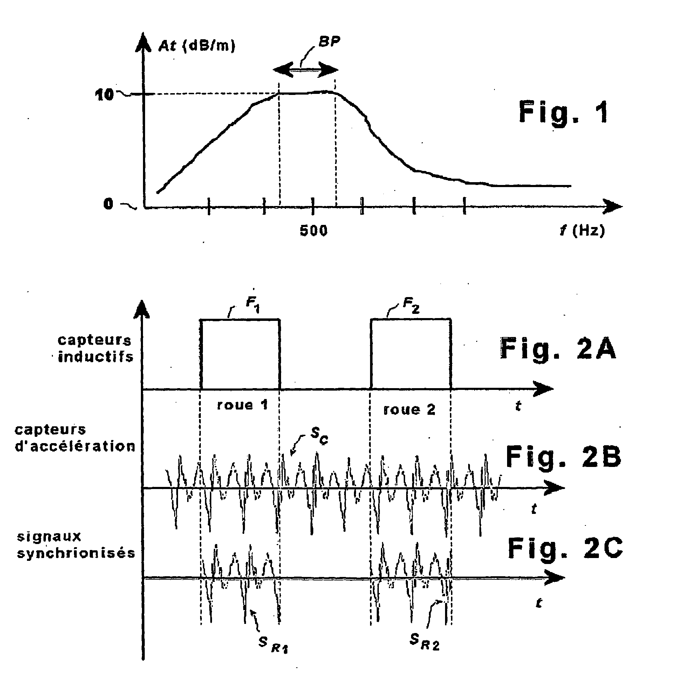

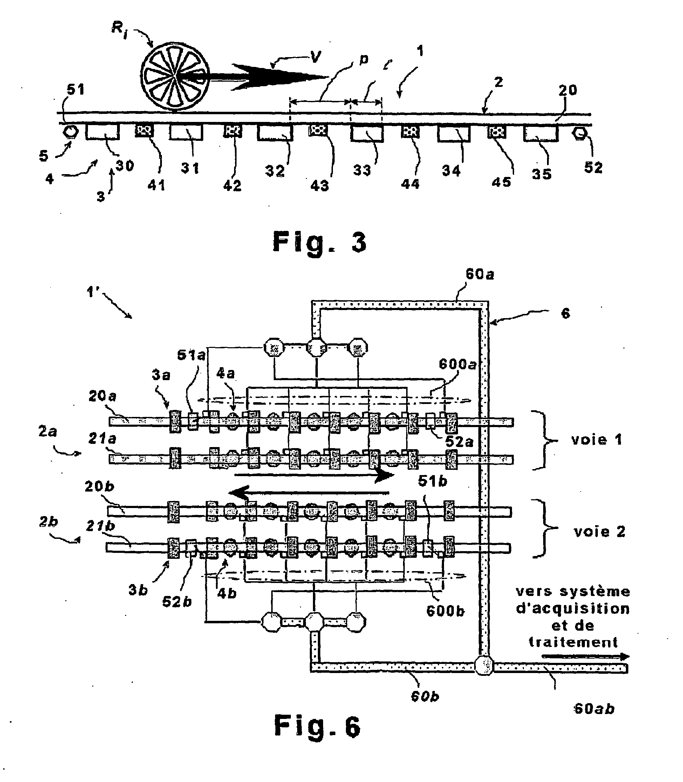

Sur la figure 1 on a représenté une courbe illustrant schématiquement un exemple typique de l'atténuation de l'amplitude $At$ (en dB/m) de vibration se propageant dans un rail de chemin de fer (par exemple 20, figure 3) en fonction de la fréquence $f$ exprimée en Hz. Cette courbe, par exemple en forme de cloche, met en évidence une bande de fréquences d'atténuation maximale $BP$, se situant dans l'exemple décrit autour de la fréquence 500 Hz pour une valeur d'atténuation $At$ sensiblement égale à 10 dB/m, ces données n'ayant toutefois qu'une valeur purement illustrative.

L'obtention d'une courbe du type de celle de la figure 1 et, notamment, des caractéristiques de la bande d'atténuation maximale (amplitude de cette atténuation $At$ en fonction de la fréquence, largeur de bande $BP$ et position dans le spectre de fréquences de cette bande $BP$), constitue une première phase du procédé selon l'invention, que l'on qualifiera de phase initiale.

Il est à noter que, *a priori,* cette phase n'est réalisée qu'une seule fois, pour le moins très rarement. En effet, la courbe de la figure 1 dépend essentiellement de caractéristiques mécaniques locales des organes composant le tronçon de voie instrumenté (rails, traverses, etc.). Ces caractéristiques sont peu sujettes à variation. Il est généralement suffisant d'effectuer des contrôles à des intervalles de temps importants, ce qui permet de détecter d'éventuelles dérives temporelles.

On va maintenant illustrer les étapes ultérieures du procédé selon l'invention, lors d'une phase que l'on qualifiera d'opérationnelle, en décrivant un exemple de dispositif 1 de mise oeuvre de ce procédé tel que représenté schématiquement sur la figure 3.

Sur la figure 3, on a représenté une roue $R_i$ d'un train non représenté, qui est animée d'une vitesse linéaire V parallèlement à la voie de roulement 2, plus précisément parallèlement au rail 20 avec lequel elle est en contact.

Selon des caractéristiques importantes de l'invention, le dispositif 1 de détection de défauts de circularité d'une roue $R_i$ se présente sous la forme d'un tronçon instrumenté de la voie 2. On doit bien comprendre, qu'à l'exception des instruments de mesure (capteurs, etc.) disposés de la façon qui va être explicitée ci-après, il s'agit, de façon préférentielle, d'une voie tout à fait standard, destinée au trafic normal des trains. Le dispositif conforme à l'invention ne nécessite en effet aucune modification significative des organes constituant la voie de chemin de fer 2. Cette particularité constitue d'ailleurs un des avantages substantiels de l'invention.

La voie 2 comprend des rails, représentés sous la référence unique 20, qui sont soutenus par une série de traverses 3, dont six ont été représentées en 30 à 35. Le pas inter-traverses est p et leur largeur est *l*.

Pour détecter l'apparition des vibrations induites par le passage d'un train, par exemple celles dues à la roue $R_i$, selon des caractéristiques importantes de l'invention toujours, on dispose sur la voie une pluralité de capteurs de mesure de vibration 4, un entre chaque paires de traverses, à savoir cinq dans l'exemple illustré, 41 à 45. De façon préférentielle, les capteurs sont des accéléromètres piézo-électriques.

Sauf pour certaines applications, quelques types de réseaux de tramway, par exemple, qui ne comprennent qu'un rail de guidage sur lequel roule un galet dont on cherche à détecter les défauts éventuels de circularité, les voies comprennent le plus souvent deux rails. On doit bien comprendre que, pour ces applications, il y a lieu d'associer des capteurs de mesure de vibration à chacune des files de rails, même si une seule série a été représentée sur la figure 3 pour simplifier le dessin.

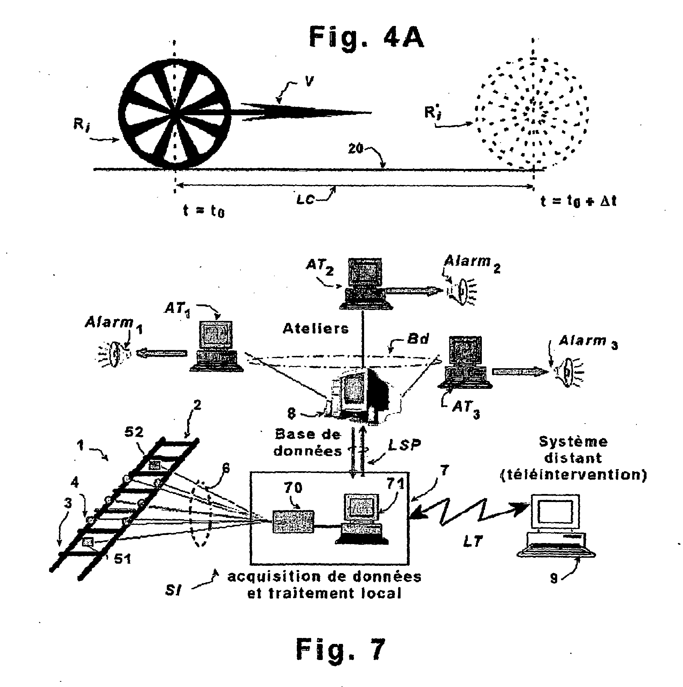

La figure 4A illustre le chemin parcouru par la roue (position initiale $R_i$ au temps arbitraire t = $t_0$) lorsqu'elle effectue un tour complet autour de son axe de roulement (position finale $R'_i$ au temps t = $t_0$+ $\Delta$t, représentant le temps nécessaire pour atteindre la position finale, compte tenu de la vitesse et du développement de la roue, c'est-à-dire la longueur de la circonférence $LC$).

Le nombre de capteurs, 41 à 45, est directement déterminé, d'une part par les caractéristiques de la roue $R_i$, c'est-à-dire son développement circonférentiel, d'autre part, par le pas inter-traverses $p$ et leur largeur $l$, valeurs qui déterminent le nombre de traverses sur le tronçon de voie instrumenté. La longueur de ce tronçon de voie doit être au moins égale au développement circonférentiel $LC$ de la roue $R_i$.

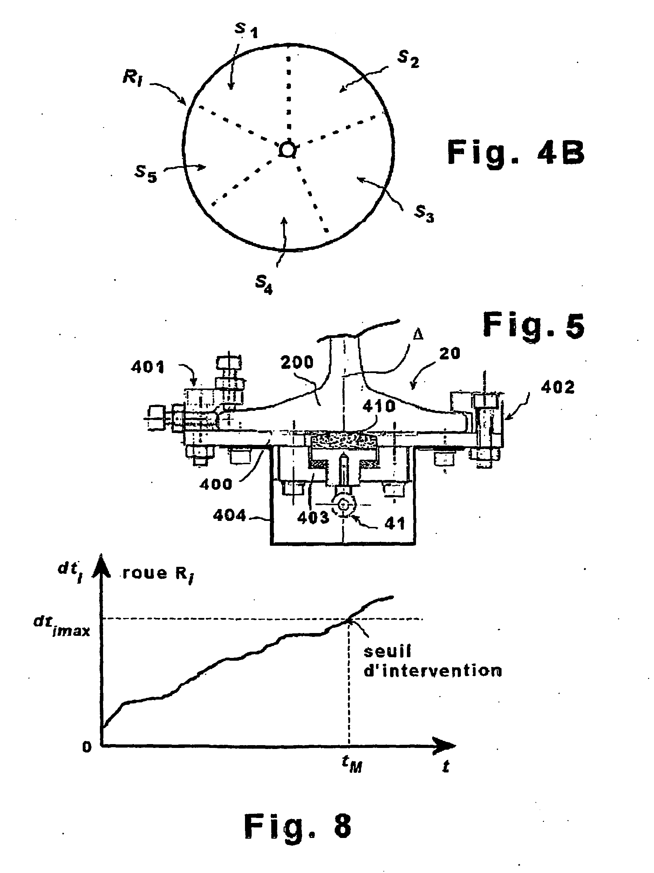

De ce fait, en fonction du nombre d'accéléromètres piézo-électriques, 41 à 45 (figure 3), chaque roue $R_i$ va être divisée en bandes ou secteurs virtuels, par exemple cinq secteurs, $S_1$ à $S_6$, comme illustré schématiquement par la figure 4B.

Les signaux analogiques délivrés par ces accéléromètres, 41 à 45, sont transmis à des circuits d'acquisition et de traitement (non représentés), notamment pour être numérisés et filtrés.

Il est également utile de connaître l'instant exact des passages de roues, par exemple de la roue $R_i$, au-dessus des accélérateurs piézo-électriques, 41 à 45, pour effectuer une corrélation temporelle entre les mesures acquises et lesdits passages.

Selon une autre caractéristique de l'invention, on dispose des capteurs supplémentaires pour générer des tops de synchronisation. On met en oeuvre de façon préférentielle des capteurs inductifs 5, et dans un mode de réalisation préféré, une paire de capteurs, 51 et 52, disposés de part et d'autre de la série d'accéléromètres piézo-électriques, 41 à 45, plus précisément avant et après les première et dernière traverses, 30 et 35.

Cette caractéristique permet à la fois de générer des tops de synchronisation détectant l'arrivée et le passage de la roue $R_i$ et de calculer la vitesse linéaire de cette roue $R_i$ connaissant la distance séparant les deux capteurs, 51 et 52.

Les signaux analogiques délivrés par les capteurs inductifs, 51 et 52, sont également numérisés, ce en synchronisme avec les signaux des accéléromètres, 41 à 45.

Comme illustré schématiquement par courbe de la figure 2A, l'obtention de tops de synchronisation et la connaissance de la vitesse linéaire des roues permettent de générer, à l'aide de circuits électroniques classiques de type bascules ou similaires, une suite de fenêtres de temps, $F_1$ et $F_2$, associées à des roues successives, par exemple deux roues, "roue 1" et "roue 2". Dans la réalité, le nombre de roues d'un train, voire d'une rame, est généralement beaucoup plus important.

Chaque accéléromètre, 41 à 45 (figure 3), délivre sur sa sortie des signaux $S_c$ du type de ceux représentés très schématiquement sur la figure 2B.

On applique à ces signaux $S_c$ les fenêtres de temps, $F_1$ et $F_2$, et on obtient des séries de signaux, $S_{R1}$ et $S_{R2}$, illustrés très schématiquement par la figure 2C, qui sont associées chacune à une roue particulière, par exemple les roues "roue 1" ou "roue 2".

Selon une caractéristique importante supplémentaire de l'invention, après numérisation les signaux détectés et mesurés sont appliqués à un filtre numérique passe-bande optimisé (non représenté), préférentiellement de type dit "elliptique", de façon à ne retenir que ceux présents à l'intérieur des bandes de fréquence d'atténuation maximale *BP* (figure 1). La réalisation et l'optimisation d'un tel filtre sont bien connues de l'Homme de métier et il est inutile de la détailler plus avant. Comme il a été indiqué, ce filtre passe-bande, en sélectionnant les fréquences pour lesquelles l'atténuation vibratoire dans le rail est maximale, permet d'éviter qu'un défaut présent sur une roue donnée, par exemple la roue "roue 1", "pollue" la détection d'un défaut éventuellement présent sur une autre roue de la rame ou du train, par exemple la roue "roue 2".

En résumé, la numérisation synchrone des signaux vibratoires générés par les accéléromètres, 41 à 45, et des signaux issus des capteurs inductifs, 51 et 52, permet donc de déterminer à chaque instant la position d'une roue donnée par rapport à chaque accéléromètre.

Le traitement consiste alors à calculer pour chaque accéléromètre, 41 à 45, le niveau d'accélération dans la bande de fréquence définie préalablement *BP*, lors du passage d'une roue sur le pas inter-traverses correspondant à un accéléromètre.

Le passage d'une roue, par exemple la "roue 1", est alors caractérisé par *N* niveaux vibratoires, *N* étant le nombre d'accéléromètres par file de rail, soit cinq niveaux vibratoires dans l'exemple de la figure 3 : $LA_1$ à $LA_5$.

Deux indicateurs caractérisant les défauts de circularité de la roue sont alors calculés à partir de ces *N* niveaux vibratoires.

Un premier indicateur $Ind_1$ correspond au niveau vibratoire maximal mesuré. Cet indicateur est directement lié à l'amplitude totale *dt* du défaut de circularité de roue, et donc donné par la relation suivante :

$$Ind_1 = Max(LA_i) \qquad (1),$$

avec $1 \leq i \leq 5$ dans l'exemple décrit,
et de façon générale $1 \leq i \leq N$, *N* étant le nombre total de capteurs du tronçon de voie instrumenté.

La présence effective d'un défaut de roue, pour un matériel ferroviaire de caractéristiques données, est déterminée par la comparaison des niveaux vibratoires mesurés avec des niveaux prédéterminés, qui sont par exemple obtenus par le calcul ou par expérimentation lors de la conception de ce matériel. Il peut également s'agir de valeurs dérivées de mesures précédemment effectuées sur le même matériel ferroviaire (historique). Des données correspondantes peuvent être stockées dans des bases de données d'un système informatisé, accessibles par le dispositif de l'invention comme il sera montré ci-après par référence aux figures 7 et 8.

Un second indicateur $Ind_2$ correspond à la différence entre le niveau maximal et le niveau minimal normé par le niveau maximal. Cet indicateur renseigne sur la nature du défaut de circularité sur le tour d'une roue. Il est donc donné par la relation suivante :

$$Ind_2 = \frac{Max(LA_i) - Min(LA_i)}{Max(LA_i)} \qquad (2).$$

Si cette valeur tend vers l'unité, cela signifie que le défaut est très localisé sur le tour de roue (écaillage, trou,...) ; si elle tend vers zéro, cela signifie que le défaut est homogène sur le tour de roue (polygonisation, etc.).

On va maintenant décrire, en regard de la figure 5 (vue en coupe transversale), un exemple de réalisation pratique d'un capteur à accéléromètre, par exemple le capteur 41, et de son châssis de protection et de fixation à un rail 20 (figure 3).

Bien que le capteur 41 puisse être disposé contre les parois du rail 20 à des endroits divers, dans un mode de réalisation préféré représenté sur la figure 5, on le dispose sous la semelle 200 du rail 20, de façon plus précise de telle sorte qu'il mesure des accélérations verticales, suivant un axe de symétrie vertical Δ passant par le centre de la semelle 200. Cette disposition optimise la qualité et la fiabilité des mesures effectuées.

Le châssis comprend une platine support 400 plaquée contre la partie inférieure de la semelle 200. Cette platine 400 est assujettie sur la semelle 200 par un jeu de brides latérales, 401 et 402 respectivement, munies de vis et d'écrous permettant le montage/démontage de l'ensemble. Cette caractéristique avantageuse permet de fixer l'ensemble sans intervention de type perçage ou soudage. Le rail 20 ne nécessite donc aucune modification. L'accéléromètre 41 est préalablement monté et fixé sur le support 400 et c'est l'ensemble qui est ensuite monté sur le rail 20 ou démonté du rail 20. La pose et la dépose en voie sont donc facilitées et rapides.

Le capteur 41 est maintenu assujetti à la platine 200 par tout organe de fixation approprié 403. Il n'est toutefois pas en contact direct avec la semelle 200. On prévoit avantageusement un organe d'interface 410 entre la semelle 200 et le capteur 41. A titre d'exemple non limitatif, il peut s'agir d'une pastille bombée en céramique. Ces dispositions assurent une liaison mécanique suffisamment raide pour permettre une transmission des vibrations sans atténuation sensible tout en garantissant l'isolation électrique du capteur 41 par rapport au rail 20.

Enfin, on prévoit un capot de protection 404, avantageusement démontable, formant boîtier pour le capteur 41.

On va maintenant décrire, par référence à la figure 6, un exemple de réalisation d'un dispositif 1' de détection de défauts de circularité de roues plus particulièrement adapté à l'application principale visée par l'invention, à savoir la détection de défauts de circularité de roues de rames de train de type "TGV" ou similaires.

Plus précisément, sur la figure 6, on a représenté deux voies $2a$ et $2b$ pour la circulation dans les deux sens des trains (figurés par des flèches), comportant chacune deux rails, $2a$ - $2b$ et $2a$ - $2b$ respectivement. De façon générale, les organes des première et seconde voies de circulation sont associés aux lettres "$a$" et "$b$" respectivement. On retrouve les organes déjà décrits sur la figure 3 pour chacune des voies, en nombre identique, cinq capteurs d'accélération étant typique de cette application, compte tenu du développement circonférentiel des roues des rames (non représenté) et des caractéristiques physiques des voies propres à ce type de train. Le mode de fonctionnement est tout à fait similaire, sinon identique à celui qui a été décrit en regard de la figure 3, et il n'y a pas lieu de le redécrire plus avant.

De façon pratique, les différents signaux générés sur les sorties des accéléromètres, 4a et 4b, et des capteurs inductifs, $50a$ à $52b$, sont transmis à un système d'acquisition et de traitement de données (non représenté sur la figure 6), par l'intermédiaire d'une pluralité de liaisons électriques 6. Les liaisons individuelles, $600a$ et $600b$, connectées aux sorties de chacun des capteurs, sont réunies localement en deux faisceaux $60a$ et $60b$, un pour chaque voie, $2a$ et $2b$, puis en un faisceau unique $60ab$. Il s'agit généralement d'un câble protégé transportant les signaux précités jusqu'au système d'acquisition et de traitement de données, généralement situé en bord de voie.

On va maintenant décrire, par référence à la figure 7, un exemple de réalisation d'un système informatique complet comprenant un ou plusieurs dispositif de détection de défauts de circularité de roues conformes à l'invention, par exemple le dispositif 1 décrit sur la figure 3.

Le système informatique $Sl$ comprend un système d'acquisition et de traitement de donnés 7 recevant les signaux générés par les capteurs 4, 51 et 52, disposés sur le tronçon de voie instrumenté 2, via les liaisons 6. Le système 7 comprend des circuits électroniques d'acquisition proprement dits 70, munis de ports appropriés à la nature des signaux reçus. Bien qu'ils aient été représentés séparés, ces circuits 70 peuvent être incorporés dans un système de traitement automatique de données numériques à programme enregistré 71, muni d'un microprocesseur standard ou d'un processeur de traitement de signal spécialisé. Il peut s'agir en effet de circuits dits d'entrée/sortie de ce système 71.

Généralement le système 7 est un système "local", c'est-à-dire qu'il est disposé dans un abri en bord de la voie, car il est difficile de transmettre sur une longue distance les signaux analogiques acquis par les capteurs 4, 51 et 52, sans un traitement préalable et leur conversion sous une forme appropriée pour de telles transmissions.

Les étapes de numérisation et de filtrage, ainsi que les autres étapes du procédé qui ont été précédemment décrites, sont réalisées dans les circuits d'acquisition 70 et/ou de traitement de données numériques 71.

La numérisation et/ou le filtrage passe-bande peuvent être effectués par des circuits électroniques matériels, mais aussi, en variante, par logiciel.

Le système 71 comprend naturellement, outre un processeur, tous les circuits nécessaires à son bon fonctionnement, notamment des circuits de mémoire centrale, fixe et volatile, pour l'enregistrement de programmes et l'enregistrement temporaire de données, ainsi que des moyens de stockage (disque dur, etc.) et des organes de saisie de données (clavier, etc.) et d'affichage.

Le système 71 est relié par l'intermédiaire de circuits de transmission à distance (modem, etc.) et de liaisons spécialisées bidirectionnelles $LSP$, à un système distant 8 associé à une base de données, par exemple constitué par un système de traitement automatique de données à programme enregistré muni de moyens de stockage de données (disque dur, etc.).

Dans cette base de données, on enregistre les caractéristiques des différents matériels ferroviaires susceptibles de circuler sur le ou les tronçon(s) de voie instrumenté(s), par exemple le tronçon de voie 1 de la figure 7, notamment les caractéristiques vibratoires de ces matériels ferroviaires. On enregistre également le comportement vibratoire de ce ou ces tronçons de voie acquis lors de la phase initiale du procédé selon l'invention, notamment les courbes d'atténuation (figure 1) et les bandes de fréquences d'atténuation maximale $BP$. On enregistre enfin des données statistiques et d'historique comme explicité ci-après.

A partir de ces données et des données dérivées des mesures effectuées au passage d'un train, le système 71 réalise les comparaisons et calculs nécessaires pour déterminer la présence éventuelle de défauts de circularité de roue, et dans l'affirmative, il identifie sans ambiguïté la ou les roues présentant de tels défauts les distinguant des autres roues, ainsi que la nature de ces défauts, et si un seuil préétabli est dépassé, il génère des signaux d'alarme. Pour ce faire, le système 71 calcule notamment les deux indicateurs précités $Ind_1$ et $Ind_2$ (relations (1) et (2) respectivement).

Les données élaborées par le système 71 sont transmises au système de traitement automatique de données à programme enregistré 8 et elles sont stockées dans la base de données de manière à enrichir son contenu progressivement. Il est notamment possible d'élaborer des statistiques et de suivre les dérives temporelles des caractéristiques vibratoires d'un matériel ferroviaire donné (données d'historique).

A titre d'exemple, la figure 8 est une courbe représentant très schématiquement l'évolution de la valeur d'amplitude maximale d'un défaut de circularité $dt_i$ d'une roue donnée $R_i$ en fonction du temps $t$. Comme rappelé ci-dessus, cette valeur peut être obtenue à partir de l'indice $Ind_1$. Les différentes valeurs de $dt_i$ de la courbe de la figure 8 sont acquises progressivement lors de chaque passage du matériel ferroviaire concerné sur le tronçon de voie instrumenté 2 (figure 7) et stockées dans la base de données du système 8. A l'instant $t_M$, la valeur $dt_i$ atteint une valeur de seuil $dt_{imax}$ correspondant à une valeur maximale admissible pour la roue en question $R_i$ du matériel ferroviaire concerné. Le dépassement de ce seuil entraîne la génération par le système 71 (figure 7) d'un signal d'alarme qui est transmis au système informatique 8 et enregistré dans la base de données, notamment à des fins statistiques et/ou d'historique. Ce signal d'alarme entraîne à son tour une intervention pour maintenance de la rame concernée.

A cette fin, le système 8 est également relié par des bus de transmission de données appropriés à un ou plusieurs systèmes de traitement automatique de données à programme enregistré supplémentaires dont sont équipés des ateliers de maintenance, trois dans l'exemple décrit sur la figure 7 : $AT_1$ à $AT_3$. On a également supposé que les ateliers comprenaient des dispositifs d'alarme figurés par des avertisseurs sonores, $Alarm_1$ à $Alarm_3$.

Selon une autre caractéristique avantageuse de l'invention, on prévoit une possibilité de télé-intervention, qui rend possible ce qui sera appelé en termes de métier "maintien en condition opérationnelle" des capteurs ou "MCO".

Pour ce faire on prévoit une ligne externe de transmission de données $LT$, avantageusement une ligne téléphonique classique, entre un système de traitement automatique de données à programme enregistré distant de télé-intervention 9 et le système 7, via des circuits spécialisés du système 71 (modem, etc.). Il doit être bien compris que tout autre type de liaison peut être mis en oeuvre : fibre optique, radio-transmission, technologie dite "ADSL" pour des liaisons via le réseau Internet ou un réseau intranet, etc.

Le système 9 est sous la responsabilité d'un exploitant ou du fournisseur du matériel et des systèmes de détection de défauts de circularité de roues.

Grâce à la ligne téléphonique externe $LT$, il est possible de visualiser dans des locaux distants les données acquises, traitées et générées par le système 7. On peut également transmettre des commandes à ce système 7 et/ou télécharger des programmes dans le système 71, par exemple des mises à jour.

On peut également par ce biais détecter des dysfonctionnements et prévenir l'exploitant du matériel ferroviaire. Par exemple, en cas de défaillance d'un ou plusieurs accéléromètres, il est aussi possible de basculer sur des modes de fonctionnement dits "dégradés" (détection sur un nombre plus faible d'accéléromètres, etc ...) dans l'attente de l'intervention du personnel qualifié de l'exploitant ferroviaire. L'analyse à distance des mesures sur le système 9 permet de préciser au personnel de l'exploitant ferroviaire la nature des interventions à réaliser. La réussite de l'intervention peut également être validée en temps réel.

Enfin, le retour d'expérience acquis grâce à la télé-intervention facilite l'évolution des outils logiciels, que ce soit ceux nécessaires au bon fonctionnement du système 7, notamment pour réaliser toutes les étapes plus spécifiques au procédé selon l'invention, notamment la numérisation, le filtrage, et le calcul des deux indicateurs précités, ou encore les programmes nécessaires à l'élaboration de la base de données du système 8. On peut d'ailleurs prévoir de dupliquer tout ou partie des données de cette base, sous une forme identique ou modifiée pour des besoins spécifiques, dans une base de données supplémentaire (non représentée) associée au système 9, par exemple en vue de mettre à jour, en tant que de besoin, les outils logiciels précités.

A la lecture qui précède, on constate aisément que l'invention atteint bien les buts qu'elle s'est fixée. Elle présente de nombreux avantages qui ont été indiqués dans la présente description, et il est inutile de les rappeler ici.

Il doit être clair cependant que l'invention n'est pas limitée aux seuls exemples de réalisations explicitement décrits, notamment en relation avec les figures 1 à 8. En particulier les valeurs numériques et les exemples de matériaux n'ont été donnés que pour mieux illustrer les caractéristiques principales de l'invention. Ils ne procèdent que d'un choix technologique qui est à la portée de l'Homme de métier. L'invention n'est pas limitée non,plus aux seules applications explicitement décrites.

**Revendications**

1. Procédé de détection de défauts de circularité de roues au passage d'un matériel ferroviaire circulant avec une vitesse déterminée sur une voie ferrée comprenant au moins un rail reposant sur des traverses supports, ledit matériel ferroviaire comprenant au moins une roue en contact avec ledit rail et induisant dans ce rail des vibrations lors dudit passage, lesdites vibrations étant substantiellement absorbées par lesdites traverses dans un spectre de fréquences déterminé,

**caractérisé en ce qu'**il comprend :

- une phase initiale pendant laquelle le comportement vibratoire d'un tronçon de la voie (2) dit instrumenté est déterminé et une bande de fréquences de vibration (*BP*) présentant une atténuation maximale desdites vibrations est sélectionnée ;
- une phase subséquente, dite opérationnelle, comprenant au moins les étapes suivantes :
- une étape d'acquisition d'une première série de signaux analogiques (S$_c$) représentant l'amplitude desdites vibrations induites par chaque roue, à l'aide de premiers capteurs (4) répartis le long dudit tronçon de voie instrumenté (2) ;
- une étape d'acquisition d'une seconde série de signaux analogiques à l'aide de seconds capteurs (5), de manière à générer des signaux de synchronisation au passage de chaque roue (*R$_i$*) en un endroit prédéterminé dudit tronçon de voie instrumenté (2) ;
- une étape de numérisation synchrone desdites deux séries de signaux analogiques, de manière à déterminer à chaque instant la position de chaque roue (*R$_i$*) par rapport à chacun desdits premiers capteurs (4) ;
- une étape de filtrage de ladite première série de signaux (*S$_c$*) après numérisation à l'aide d'un filtre passe-bande numérique, de manière à ne retenir que les signaux associés à des vibrations de fréquences comprises dans ladite bande d'atténuation maximale (*BP*) ; et
- une étape de traitement desdits signaux représentant des vibrations, acquis, numérisés et filtrés, de manière à déterminer la présence desdits défauts de circularité de roue par comparaison avec des valeurs préétablies d'amplitudes de vibration.

2. Procédé selon la revendication 1, **caractérisé en ce que** ladite détermination du comportement vibratoire dudit tronçon de voie instrumenté (20) et la sélection de ladite bande de fréquences d'atténuation maximale (*BP*) lors de ladite phase initiale sont obtenues par une expérimentation *in situ* à la suite d'une campagne d'essais dits "au marteau", ou par calcul lors de la conception initiale de ladite voie ferrée (2) en fonction des caractéristiques physiques des organes composant ledit tronçon de voie instrumenté.

3. Procédé selon la revendication 1 ou 2, **caractérisé en ce que** ladite phase opérationnelle comprend une étape supplémentaire de calcul de ladite vitesse (*V*) déterminée à l'aide desdits signaux de synchronisation.

4. Procédé selon l'une des revendications 1, 2, ou 3, **caractérisé en ce que** chaque roue (*R$_i$*) ayant un développement circonférentiel déterminé (*LC*), la longueur dudit tronçon de voie instrumenté (2) est au moins égal audit développement de roue (*LC*), et **en ce que** chacun desdits premiers capteurs (4) est disposé entre deux traverses consécutives (3), le nombre total *N* de ces capteurs (4) étant déterminé par le nombre de traverses contenues dans ledit tronçon de voie instrumenté.

5. Procédé selon l'une quelconque des revendications 1 à 4, **caractérisé en ce que**, lors de ladite étape de traitement de signaux représentant des vibrations, un premier indicateur *Ind$_1$*, correspondant à une amplitude de défaut de circularité détecté sur une roue (*R$_i$*), dite totale *dt*, est déterminée par le calcul de la relation :

$$Ind_1 = Max(LA_i),$$

avec 1 ≤ *i* ≤ *N, N* étant le nombre desdits premiers capteurs (4) et *LA$_i$* étant l'amplitude des signaux de vibration mesurés par un capteur de rang i dans ladite bande de fréquences de vibration présentant une atténuation maximale (*BP*).

6. Procédé selon la revendication 5, **caractérisé en ce que**, lesdits défauts de circularité de roue pouvant être de natures physiquement distinctes, lors de ladite étape de traitement de signaux représentant des vibrations, un second indicateur *Ind$_2$*, renseignant sur ladite nature de défaut, est déterminé par le calcul de la relation :

$$Ind_2 = \frac{Max(LA_i) - Min(LA_i)}{Max(LA_i)},$$

avec $1 \le i \le N,$

$N$ étant le nombre desdits premiers capteurs (4) et $LA_i$ étant l'amplitude des signaux de vibration mesurés par un capteur de rang i dans ladite bande de fréquences de vibration présentant une atténuation maximale ($BP$).

7.  Dispositif de détection de défauts de circularité de roue comportant des moyens appropriés pour la mise en oeuvre du procédé selon l'une quelconque des revendications précédentes, parmi lesquels des premiers capteurs (4) répartis le long d'un tronçon de voie ferrée instrumenté pour acquérir une première série de signaux analogiques représentant l'amplitude de vibrations induites par chaque roue circulant sur ledit tronçon, des seconds capteurs (5) pour acquérir une seconde série de signaux analogiques et générer des signaux de synchronisation au passage de chaque roue en un endroit prédéterminé dudit tronçon et déterminer ainsi à chaque instant la position de chaque roue par rapport à chacun desdits premiers capteurs, et des moyens de filtrage des signaux de ladite première série qui sont associés à des vibrations de fréquences comprises dans une bande ($BP$) de fréquences de vibration préalablement sélectionnée comme correspondant à une atténuation maximale des vibrations sur ledit tronçon de voie, ainsi que des moyens de traitement desdits signaux représentatifs de vibrations de manière à déterminer la présence de défauts de circularité de roue par comparaison avec des valeurs pré-établies d'amplitudes de vibration.

8.  Dispositif selon la revendication 7, **caractérisé en ce que** lesdits premiers capteurs (4) sont des accéléromètres piézo-électriques mesurant l'amplitude desdites vibrations, chaque capteur (4) étant disposé entre deux traverses successives (3) dudit tronçon de voie instrumenté (20).

9.  Dispositif selon la revendication 7 ou 8, **caractérisé en ce que**, chaque rail (20) comprenant une semelle (200) reposant sur lesdites traverses supports (3), lesdits accéléromètres (41) sont disposés sous ladite semelle (200), de telle sorte que chacun mesure des accélérations verticales, suivant un axe vertical ($\Delta$) passant par le centre de cette semelle (200).

10.  Dispositif selon la revendication 7, 8, ou 9, **caractérisé en ce que** chaque accéléromètre (41) est disposé dans un châssis comprenant une platine support (400) assujettie à ladite semelle (200) par un jeu de brides latérales (401, 402) munies d'organes permettant des opérations de montage/démontage dudit châssis sans modification dudit rail (20), ainsi que des moyens de fixation (403) dudit accéléromètre sur ladite semelle (400), qu'un organe d'interface (410) isolant électriquement celui-ci dudit rail (20), tout en transmettant lesdites vibrations sans atténuation sensible, et qu'un capot de protection (404) formant boîtier.

11.  Dispositif selon l'une quelconque des revendications 7 à 10, **caractérisé en ce que** lesdits seconds capteurs (5) sont des capteurs inductifs, **en ce que** ces capteurs sont au nombre de deux (51, 52) pour ledit tronçon de voie instrumenté (2), **en ce qu'**un premier capteur inductif (51) est disposé à un première extrémité de ce tronçon pour détecter l'arrivée et le passage d'une roue ($R_i$) et générer un signal de synchronisation, et **en ce qu'**un un second capteur (52) est disposé à l'autre extrémité dudit tronçon, à une distance prédéterminée du premier capteur inductif, de manière à autoriser un calcul de vitesse ($V$) à partir de cette distance prédéterminée et du développement circonférentiel de chaque roue ($LC$).

12.  Système informatisé pour la détection de défauts de circularité des roues d'un matériel ferroviaire circulant sur une voie ferrée, **caractérisé en ce qu'**il comprend un dispositif de détection de défauts de circularité de roue selon l'une quelconque des revendications 7 à 11, en combinaison avec des moyens d'acquisition et de traitement de données (7) recevant lesdites première et seconde séries de signaux analogiques générés en sortie desdits premiers (4) et seconds (5) capteurs respectivement, lesdits moyens d'acquisition de données (7) comprenant des moyens de numérisation synchrone desdites première et seconde séries de signaux analogiques, des moyens de filtrage numériques des premiers signaux numérisés de ladite première série, pour ne retenir que ceux présents dans ladite bande d'atténuation maximale de fréquences ($BP$), et des moyens de calcul (71), opérant sous la commande de programmes enregistrés pour détecter à partir desdits signaux numérisés et filtrés, après comparaison avec des valeurs prédéterminées, la présence de défauts de circularité de roue et identifier une ou plusieurs roues ($R_i$) présentant ces défauts.

13.  Système informatisé selon la revendication 12, **caractérisé en ce que** ledit système d'acquisition et de traitement de données (7) est un micro-ordinateur comprenant un processeur pour effectuer lesdits calculs, des moyens de mémorisation desdits programmes et desdites données numériques, des moyens d'acquisition de données de type clavier ou souris, des moyens de visualisation et des moyens de télécommunication pour des connexions avec des systèmes distants.

EP 1 954 544 B1

**14.** Système informatisé selon la revendication 13, **caractérisé en ce qu'**il comprend en outre un système de traitement automatique de données à programme enregistré (8) associé à une base de données, **en ce que** ledit système d'acquisition de données (7) est connecté à ladite base de données à l'aide d'une liaison bidirectionnelle spécialisée (*LSP*) et desdits moyens de télécommunication, **en ce que** ladite base de données enregistre les résultats des calculs effectués par ledit système d'acquisition de données (7) et transmet à ce dernier des données enregistrées caractérisant ledit matériel ferroviaire et leurs dérives temporelles, de façon à permettre la détection de défauts de circularité de roue, en amplitude et en nature, à partir de ces données enregistrées et desdits signaux acquis, numérisés et filtrés.

**15.** Système informatisé selon la revendication 14, **caractérisé en ce que** ledit système de traitement automatique de données à programme enregistré (8) associé à une base de données est connecté, via des bus de transmission de données (*Bd*), à au moins un atelier de maintenance (*AT₁ - AT₃*) dudit matériel muni d'un système de traitement automatique de données à programme enregistré supplémentaire et associé à des moyens d'alarme (*Alarm₁ - Alarm₃*), **en ce que** ledit système d'acquisition de données (7) génère des signaux d'alarme lorsqu'un défaut de circularité détecté sur une roue (*Rᵢ*) d'un matériel ferroviaire présente des caractéristique d'amplitude et/ou de nature dépassant un seuil prédéterminé, et **en ce que** ces signaux d'alarme sont transmis, via ledit système de traitement automatique de données à programme enregistré (8) associé, à l'un desdits ateliers (*AT₁ - AT₃*) et à son moyen d'alarme associé (*Alarm₁ - Alarm₃*), de manière à déclencher une intervention de maintenance sur ledit matériel ferroviaire présentant ledit défaut.

**16.** Système informatisé selon l'une quelconque des revendications 12 à 15, **caractérisé en ce qu'**il comprend en outre un système distant de télé-intervention (9), **en ce que** ce système distant (9) communique avec ledit système d'acquisition et de traitement de données (7) par l'intermédiaire de moyens de télécommunication et d'une ligne de transmission (*LT*), de façon à surveiller et à télécommander les opérations effectuées par ledit système d'acquisition et de traitement de données (7), ladite ligne de transmission (*LT*) étant notamment une ligne téléphonique.

**17.** Système informatisé suivant la revendication 16, **caractérisé en ce que** ledit système distant de télé-intervention (9) comprend des moyens pour détecter à distance des disfonctionnements dudit dispositif de détection de défauts de circularité de roue (1) dus à la défaillance d'au moins un desdits accéléromètres (4), et pour transmettre des ordres, via ledit système d'acquisition et de traitement de données (7), pour initier un fonctionnement en mode dit dégradé mettant en oeuvre seulement une partie desdits accéléromètres (4).

**Claims**

**1.** A process for detecting wheel circularity defects upon passage of a railway equipment travelling at a determined speed on a track comprising at least one rail resting on supporting sleepers, said railway equipment including at least one wheel in contact with said rail and inducing in this rail vibrations at the time of said passage, said vibrations being substantially absorbed by said sleepers in a determined frequency spectrum,
**characterized in that** it includes:

- an initial phase, during which the vibratory behaviour of a so-called instrumented track section (2) is determined, and a vibration frequency band (BP) with a maximum attenuation of said vibrations is selected;
- a subsequent phase, called operational phase, including at least the following steps:
- a step of acquiring a first series of analogue signals (S_c) representing the amplitude of said vibrations induced by each wheel, using first sensors (4) which are distributed along said instrumented track section (2);
- a step of acquiring a second series of analogue signals using second sensors (5), in such a way as to generate synchronisation signals when each wheel (R_i) passes in a predetermined location of said instrumented track section (2);
- a step of synchronous digitisation of said two series of analogue signals, in such a way as to determine, at each instant, the position of each wheel (R_i) in relation to each of said first sensors (4);
- a step of filtering said first series of signals (S_c) after digitisation, using a digital band-pass filter, in such a way as to retain only the signals associated with vibrations of frequencies which are included in said maximum attenuation band (BP);
- and a step of processing said signals representing acquired, digitised and filtered vibrations, so as to determine the presence of said wheel circularity defects by comparison with preset values of vibration amplitudes.

**2.** A process according to Claim 1, **characterized in that** the determination of the vibratory behaviour of said instrumented track section (20) and the selection of said maximum frequency attenuation band (BP) at the time of said initial phase are obtained by experimentation in situ following a series of so-called "hammer" tests, or by calculation as a function of the physical characteristics of the components which compose said instrumented track section, when said track (2) is initially designed.

3. A process according to Claim 1 or 2, **characterized in that** said operational phase includes an additional phase of calculating said speed (V) as determined using said synchronisation signals.

4. A process according to any one of Claims 1, 2 or 3, **characterized in that** each wheel ($R_i$) having a determined circumferential evolution extent (LC), the length of said instrumented track section (2) is at least equal to said wheel evolution extent(LC), and **in that** each of said first sensors (4) is arranged between two consecutive sleepers (3), the total number N of these sensors (4) being determined by the number of sleepers which are contained in said instrumented track section.

5. A process according to any one of Claims 1 to 4, **characterized in that** at the time of said step of processing signals representing vibrations, a first indicator $Ind_1$, corresponding to an amplitude of a circularity defect which is detected on a wheel ($R_i$), called total dt, is determined by calculating the relation: $Ind_1 = Max(LA_i)$, where $1 \leq i \leq N$, and where N is the number of said first sensors (4), and $LA_i$ is the amplitude of the vibration signals measured by a sensor of rank i in said vibration frequency band with a maximum attenuation (BP).

6. A process according to Claim 5, **characterized in that**, considering that said wheel circularity defects can be of distinct physical types, said step of processing signals representing vibrations involves determining a second indicator $Ind_2$ giving information about said defect type by calculating the relation:

$$Ind_2 = \frac{Max(LA_i) - Min(LA_i)}{Max(LA_i)},$$

where $1 \leq i \leq N$ and where N is the number of said first sensors (4), and $LA_i$ is the amplitude of the vibration signals measured by a sensor of rank i in said vibration frequency band with a maximum attenuation (BP).

7. Device for detecting wheel circularity defects, including appropriate means for implementing the process according to any one of the preceding claims, which means comprise first sensors (4) distributed along an instrumented track section for acquiring a first series of analogue signals representing the amplitude of vibrations induced by each wheel which circulates on said section, second sensors (5) for acquiring a second series of analogue signals and generating synchronisation signals when each wheel passes at a predetermined place of said section, and thus determining, at each instant, the position of each wheel in relation to each of said first sensors, and means for filtering those signals of said first series which are associated with frequency vibrations included in a vibration frequency band (BP) previously selected as corresponding to a maximum attenuation of vibrations on said track section, as well as means for processing said signals that represent vibrations in such a way as to determine the presence of wheel circularity defects by comparison with preset values of vibration amplitude.

8. Device according to Claim 7, **characterized in that** said first sensors (4) are piezoelectric accelerometers which measure the amplitude of said vibrations, each sensor (4) being arranged between two successive sleepers (3) of said instrumented track section (20).

9. Device according to Claim 7 or 8, wherein each rail (20) includes a rail pad (200) which rests on said supporting sleepers (3) **characterized in that** said accelerometers (41) are arranged under said rail pad (200) in such a way that each measures vertical accelerations following a vertical axis (Δ) which passes through the centre of this rail pad (200).

10. Device according to Claim 7, 8 or 9, **characterized in that** each accelerometer (41) is arranged in a frame including a supporting plate (400) which is fixed to said rail pad (200) by a set of lateral clamps (401, 402) which are equipped with components enabling mounting and dismounting operations on said frame without modifying said rail (20), and further comprising means (403) for fixing said accelerometer on said rail pad (400), an interface component (410) which insulates the latter electrically from said rail (20) while transmitting said vibrations without significant attenuation, and a box-shaped protective cover (404).

**11.** Device according to any one of Claims 7 to 10, **characterized in that** said second sensors (5) are inductive sensors, **in that** these sensors are two in number along said instrumented track section (2), **in that** a first inductive sensor (51) is arranged at a first end of this section to detect the arrival and passage of a wheel ($R_i$) and to generate a synchronisation signal, and **in that** a second sensor (52) is arranged at the other end of said section, at a predetermined distance from the first inductive sensor, so as to enable a calculation of speed (V) from this predetermined distance and the circumferential evolution of each wheel (LC).

**12.** A computerised system for detecting wheel circularity defects of a railway equipment travelling on a track, **characterized in that** it includes a device for detecting wheel circularity defects according to any one of Claims 7 to 11, in combination with means for acquiring and processing data (7) receiving said first and second series of analogue signals which are generated at the output of said first (4) and second (5) sensors respectively, said data acquisition means (7) including means for synchronous digitisation of said first and second series of analogue signals, means for digital filtering of the first digitised signal of said first series so as to retain only those which are present in said maximum frequency attenuation band (BP), and calculation means (71), operating under the control of recorded programs, to detect from said digitised and filtered signals, after comparison with predetermined values, the presence of wheel circularity defects, and to identify one or more wheels ($R_i$) showing these defects.

**13.** A computerised system according to Claim 12, **characterized in that** said data acquisition and processing system (7) is a microcomputer including a processor for carrying out said calculations, means for recording said programs and said digital data, data acquisition means of keyboard or mouse type, display means, and telecommunication means for connections to remote systems.

**14.** A computerised system according to Claim 13, **characterized in that** it also includes an automatic data processing system with a recorded program (8) which is associated with a database, **in that** said data acquisition system (7) is connected to said database using a dedicated bidirectional link (LSP) and said telecommunication means, **in that** said database records the results of calculations which are carried out by said data acquisition system (7) and transmits to the latter the recorded data which characterize said railway equipment and their drifts over time, in such a way as to make it possible to detect wheel circularity defects, both in amplitude and type, from these recorded data and said acquired, digitised and filtered signals.

**15.** A computerised system according to Claim 14, **characterized in that** said automatic data processing system including a recorded program (8) associated with a database is connected, via data transmission buses (Bd), to at least one maintenance workshop ($AT_1 - AT_3$) for said equipment, which is equipped with an automatic data processing system including an additional recorded program and associated with alarm means ($Alarm_1 - Alarm_3$), **in that** said data acquisition system (7) generates alarm signals when a circularity defect detected on a wheel ($R_1$) of railway equipment has characteristics of amplitude and/or type which exceed a predetermined threshold, and **in that** these alarm signals are transmitted, via said automatic data processing system to one of said workshops ($AT_1 - AT_3$) and its associated alarm means ($Alarm_1 - Alarm_3$), so as to trigger a maintenance action on said railway equipment showing said defect.

**16.** A computerised system according to any one of Claims 12 to 15, **characterized in that** it also includes a remote action system (9), **in that** this remote system (9) communicates with said data acquisition and processing system (7) via telecommunication means and a transmission line (LT), so as to monitor and control remotely the operations which said data acquisition and processing system (7) carries out, said transmission line (LT) being, in particular, a telephone line.

**17.** A computerised system according to Claim 16, **characterized in that** said remote action system (9) includes means for remote detection of malfunctions of said device for detecting wheel circularity defects (1), due to the failure of at least one of said accelerometers (4) and for transmitting commands, via said data acquisition and processing system (7), to initiate functioning of the device in a so-called degraded mode using only some of said accelerometers (4).

**Patentansprüche**

**1.** Verfahren zur Detektion von Fehlern in der Rundheit von Rädern bei der Durchfahrt eines Eisenbahnbetriebsmittels, das mit einer bestimmten Geschwindigkeit auf einem Eisenbahngleis fährt, das wenigstens eine Schiene umfasst, die auf Trägerschwellen ruht, wobei das Eisenbahnbetriebsmittel wenigstens ein Rad umfasst, das in Kontakt mit der Schiene steht und in der Schiene bei der Durchfahrt Schwingungen erzeugt, wobei die Schwingungen in einem bestimmten Frequenzspektrum im wesentlichen vollständig durch die Schwellen absorbiert werden, **dadurch gekennzeichnet, dass** es umfasst:

- eine initiale Phase, während der das Schwingungsverhalten eines instrumentierten Gleisabschnitts (2) bestimmt und ein Schwingungsfrequenzband ($BP$), das eine maximale Dämpfung der Schwingungen aufweist, ausgewählt wird;
- eine daran anschließende Betriebsphase, die wenigstens die folgenden Schritte umfasst:
- Erfassung einer ersten Serie von Analogsignalen ($S_c$), welche die Amplitude der von jedem Rad induzierten Schwingungen repräsentieren, mittels erster Sensoren (4), die entlang des instrumentierten Gleisabschnitts (2) verteilt sind;
- einen Schritt zur Erfassung einer zweiten Serie von Analogsignalen mittels zweiter Sensoren (5), so dass Synchronisationssignale bei der Durchfahrt jedes Rades ($R_i$) an einer vorgegebenen Stelle des instrumentierten Gleisabschnitts (2) erzeugt werden;
- einen Schritt zur synchronen Digitalisierung der beiden analogen Signalserien, um zu jedem Moment die Position jedes Rades ($R_i$) in Bezug auf jeden der ersten Sensoren (4) zu bestimmen;
- einen Schritt zur Filterung der ersten Signalserie ($S_c$) nach der Digitalisierung mittels eines digitalen Bandpassfilters, so dass nur die Signale beibehalten werden, die zu Schwingungen mit Frequenzen fallen, die in das Band mit maximaler Dämpfung ($BP$) fallen; und
- einen Schritt zur Verarbeitung der die Schwingungen repräsentierenden erfassten, digitalisierten und gefilterten Signale, um das Auftreten von Fehlern in der Rundheit des Rades durch Vergleich mit vorbestimmten Werten der Schwingungsamplituden festzustellen.

2. Verfahren gemäß Anspruch 1, **dadurch gekennzeichnet, dass** die Bestimmung des Schwingungsverhaltens des instrumentierten Gleisabschnitts (20) und die Auswahl des Frequenzbandes mit maximaler Dämpfung ($BP$) während der initialen Phase experimentell *in situ* durch eine als "Hammertest" bezeichneten Versuchsreihe oder durch Berechnung bei der ursprünglichen Konzeption des Eisenbahngleises (2) in Abhängigkeit von den physikalischen Eigenschaften der den instrumentierten Gleisabschnitt bildenden Komponenten erfolgt.

3. Verfahren gemäß Anspruch 1 oder 2, **dadurch gekennzeichnet, dass** die Betriebsphase einen zusätzlichen Schritt zur Berechnung der bestimmten Geschwindigkeit ($V$) mittels der Synchronisationssignale umfasst.

4. Verfahren gemäß einem der Ansprüche 1, 2 oder 3, **dadurch gekennzeichnet, dass** jedes Rad ($R_i$) eine bestimmte Umfangsabwicklung ($LC$) aufweist, wobei die Länge des instrumentierten Gleisabschnitts (2) wenigstens gleich der Radabwicklung ($LC$) ist, und dadurch, dass jeder der ersten Sensoren (4) zwischen zwei aufeinanderfolgenden Schwellen (3) angeordnet ist, wobei die Gesamtzahl $N$ der Sensoren (4) durch die Zahl der in dem instrumentierten Gleisabschnitt enthaltenen Schwellen bestimmt wird.

5. Verfahren gemäß einem der Ansprüche 1 bis 4, **dadurch gekennzeichnet, dass** bei dem Schritt der Verarbeitung der die Schwingungen repräsentierenden Signale ein erster Indikator $Ind_1$, der einer ersten auf einem Rad ($R_i$) detektierten gesamten Rundheitsfehleramplitude $dt_1$ entspricht, bestimmt wird durch Berechnung der folgenden Relation:

$$Ind_1 = Max(LA_i),$$

mit $1 \leq i \leq N,$ wobei $N$ die Anzahl der ersten Sensoren (4) und $LA_1$ die Amplitude der Schwingungssignale ist, die mit einem Sensor mit Rang $i$ in dem eine maximale Dämpfung aufweisenden Schwingungsfrequenzband ($BP$) gemessen wird.

6. Verfahren gemäß Anspruch 5, **dadurch gekennzeichnet, dass**, da die Fehler der Radrundheit physikalisch unterschiedliche Ursachen haben können, bei dem Schritt der Verarbeitung der die Schwingungen repräsentierenden Signale ein zweiter Indikator $Ind_2$, der über die Art des Fehlers Auskunft gibt, bestimmt wird durch Berechung der Relation:

$$\text{Ind}_2 = \frac{Max(LA\text{i}) - Min(LA\text{i})}{Max(LA\text{i})},$$

mit $1 \leq i \leq N$,

wobei $N$ die Anzahl der ersten Sensoren (4) und $LA_1$ die Amplitude der Schwingungssignale ist, die mit einem Sensor mit Rang $i$ in dem eine maximale Dämpfung aufweisenden Schwingungsfrequenzband ($BP$) gemessen wird.

7. Vorrichtung zur Detektion von Fehlern in der Rundheit von Rädern, welche geeignete Mittel zur Durchführung des Verfahrens gemäß einem der vorhergehenden Ansprüche aufweist, darunter erste Sensoren (4), die entlang eines instrumentierten Bahngleisabschnitts verteilt sind, um eine erste Serie analoger Signale zu erfassen, welche die Schwingungsamplituden repräsentieren, die von jedem auf dem Abschnitt rollenden Rad induziert werden, zweite Sensoren (5) zur Erfassung einer zweiten Serie analoger Signale und zur Erzeugung von Synchronisationssignalen bei der Durchfahrt jedes Rades an einer bestimmten Stelle des Abschnitts, um so zu jedem Zeitpunkt die Position jedes Rades bezüglich jedes der ersten Sensoren zu bestimmen, und Mittel zur Filterung der Signale der ersten Serie, welche Schwingungen mit Frequenzen zugeordnet sind, die in einem vorab ausgewählten Schwingungsfrequenzband ($BP$) liegen, welches einer maximalen Dämpfung der Schwingungen auf dem Gleisabschnitt entspricht, sowie Mittel zur Verarbeitung der die Schwingungen repräsentierenden Signale, um das Auftreten von Fehlern in der Rundheit der Räder durch Vergleich mit zuvor festgelegten Werten der Schwingungsamplituden zu bestimmen.

8. Vorrichtung gemäß Anspruch 7, **dadurch gekennzeichnet, dass** die ersten Sensoren (4) piezoelektrische Beschleunigungsmesser sind, welche die Amplitude der Schwingungen messen, wobei jeder Sensor (4) zwischen zwei aufeinanderfolgenden Schwellen (3) des instrumentierten Gleisabschnitts (20) angeordnet ist.

9. Vorrichtung gemäß Anspruch 7 oder 8, **dadurch gekennzeichnet, dass** jede Schiene (20) einen Fuß (200) umfasst, der auf den Trägerschwellen (3) ruht, wobei die Beschleunigungsmesser (41) auf dem Fuß (200) derart angeordnet sind, dass jeder Vertikalbeschleunigungen entlang einer vertikalen Achse ($\Delta$) misst, die durch das Zentrum des Fußes (200) verläuft.

10. Vorrichtung gemäß Anspruch 7, 8 oder 9, **dadurch gekennzeichnet, dass** jeder Beschleunigungsmesser (41) in einem Gestell angeordnet ist, das eine Grundplatte (400) umfasst, die dem Fuß (200) durch einen Satz seitlicher Klemmen (401, 402) zugeordnet ist, welche mit Mitteln versehen sind, die eine Montage/Demontage des Gestells ohne Modifikation der Schiene (20) erlauben, sowie mit Befestigungsmitteln (403) des Beschleunigungsmessers auf dem Fuß (400), und einem Zwischenbauteil (410), das diesen elektrisch von der Schiene (20) isoliert und dabei die Schwingungen ohne merkliche Abschwächung überträgt, und schließlich mit einer Schutzkappe (404), die ein Gehäuse bildet.

11. Vorrichtung gemäß einem der Ansprüche 7 bis 10, **dadurch gekennzeichnet, dass** die zweiten Sensoren (5) induktive Sensoren sind, dass diese Sensoren an dem instrumentierten Gleisabschnitt (2) vorgesehen sind, dass ein erster induktiver Sensor (51) an einem ersten Ende des Abschnitts angeordnet ist, um die Ankunft und die Durchfahrt eines Rades ($R_i$) zu detektieren und ein Synchronisationssignal zu erzeugen, und dass ein zweiter Sensor (52) am anderen Ende des Abschnitts in einem vorgegebenen Abstand vom ersten induktiven Sensor angeordnet ist, um eine Berechnung der Geschwindigkeit ($V$) aus dem vorgegebenen Abstand und der Umfangsabwicklung jedes Rades ($LC$) zu gewährleisten.

12. Computersystem zur Detektion von Fehlern in der Rundheit von Rädern eines Eisenbahnbetriebsmittels, das auf einem Eisenbahngleis fährt, **dadurch gekennzeichnet, dass** es eine Vorrichtung zur Detektion von Fehlern der Rundheit eines Rades gemäß einem der Ansprüche 7 bis 11 umfasst, in Kombination mit Mitteln zur Erfassung und Verarbeitung von Daten (7), welche die ersten und zweiten Serien von Analogsignalen empfangen, die am Ausgang der ersten (4) bzw. zweiten (5) Sensoren erzeugt werden, wobei die Mittel zur Erfassung von Daten (7) Mittel zur synchronen Digitalisierung der ersten und zweiten Serie von Analogsignalen, Mittel zur digitalen Filterung der ersten digitalen Signale der ersten Serie, um nur diejenigen beizubehalten, die das Frequenzband mit maximaler Dämpfung ($BP$) repräsentieren, und Rechenmittel (71) umfassen, die programmgesteuert arbeiten, um ausgehend von den digitalisierten und gefilterten Signalen nach Vergleich mit vorgegebenen Werten das Vorhandensein von Fehlern in der Rundheit von Rädern zu detektieren und eines oder mehrere Räder ($R_i$), welche diese Fehler aufweisen, zu identifizieren.

**13.** Computersystem gemäß Anspruch 12, **dadurch gekennzeichnet, dass** das System zur Erfassung und Verarbeitung von Daten (7) ein Mikrocomputer ist, der einen Prozessor zur Durchführung der Berechnungen, Mittel zur Speicherung der Programme und der digitalisierten Daten, Mittel zur Erfassung von Tastatur- oder Mausdaten, Mittel zur Visualisierung und Mittel zur Telekommunikation zur Verbindung mit entfernten Systemen umfasst.

**14.** Computersystem gemäß Anspruch 13, **dadurch gekennzeichnet, dass** es außerdem ein programmgesteuertes System zur automatischen Verarbeitung von Daten (8) umfasst, das einer Datenbank zugeordnet ist, das das System zur Erfassung von Daten (7) mit der Datenbank über eine spezielle bidirektionelle Verbindung (*LSP*) und den Mitteln zur Telekommunikation verbunden ist, dass die Datenbank die Ergebnisse der durch das System zur Erfassung von Daten (7) durchgeführten Berechnungen speichert und zu letzterer gespeicherte Daten überträgt, welche das Eisenbahnbetriebsmaterial und dessen temporäre Abweichungen charakterisiert, so dass eine Detektion von Fehlern in der Rundheit von Rädern sowohl hinsichtlich der Amplitude als auch hinsichtlich der Art auf der Grundlage der gespeicherten Daten und der erfassten, digitalisierten und gefilterten Signale ermöglicht wird.

**15.** Computersystem gemäß Anspruch 14, **dadurch gekennzeichnet, dass** das programmgesteuerte System zur automatischen Verarbeitung von Daten (8), das einer Datenbank zugeordnet ist, über einen Datenübertragungsbus (*Bd*) mit wenigstens einer Werkstatt *(AT$_1$ - AT$_3$)* für das Betriebsmittel verbunden ist, die mit einem zusätzlichen programmgesteuerten System zur automatischen Datenverarbeitung ausgerüstet ist und der Alarmmittel *(Alarm$_1$ - Alarm$_3$)* zugeordnet sind, dass das System zur Erfassung von Daten (7) ein Alarmsignal erzeugt, wenn ein auf einem Rad (*R$_i$*) eines Eisenbahnbetriebsmittels detektierter Fehler in der Rundheit Eigenschaften hinsichtlich der Amplitude und/oder der Art aufweist, die einen vorgegebenen Grenzwert überschreiten, und dadurch, dass die Alarmsignale über das zugeordnete programmgesteuerte automatische System zur Datenverarbeitung zu einer der Werkstätten *(AT$_1$ - AT$_3$)* und an deren zugeordnete Alarmmittel *(Alarm$_1$ -Alarm$_3$)* übertragen werden, so dass eine Wartungsmaßnahme für das den Fehler aufweisende Eisenbahnbetriebsmittel ausgelöst wird.

**16.** Computersystem gemäß einem der Ansprüche 12 bis 15, **dadurch gekennzeichnet, dass** es außerdem ein entferntes System zur Fernintervention (9) umfasst, dass das entfernte System (9) über Telekommunikationsmittel und eine Übertragungsleitung (*LT*) mit dem System zur Erfassung und Verarbeitung von Daten (7) kommuniziert, um die durch das System zur Erfassung und Verarbeitung von Daten (7) durchgeführten Maßnahmen zu überwachen und fernzusteuern, wobei die Übertragungsleitung (*LT*) insbesondere eine Telefonleitung ist.

**17.** Computersystem gemäß Anspruch 16, **dadurch gekennzeichnet, dass** das entfernte System zur Fernintervention (9) Mittel zur Ferndiagnose von Funktionsstörungen der Vorrichtung zur Detektion von Fehlern in der Rundheit von Rädern (1), die auf den Ausfall wenigstens eines der Beschleunigungsmesser (4) zurückgehen, umfasst, und zur Übertragung von Befehlen über das System zur Erfassung und Verarbeitung von Daten (7), um einen herabgestuften Betriebsmodus zu initiieren, bei dem lediglich ein Teil der Beschleunigungsmesser (4) betrieben wird.

At (dB/m)

BP

10

0

500

f (Hz)

Fig. 1

capteurs
inductifs

$F_1$

$F_2$

Fig. 2A

roue 1

roue 2

t

capteurs
d'accélération

$S_C$

Fig. 2B

t

signaux
synchrionisés

Fig. 2C

t

$S_{R1}$

$S_{R2}$

$S_1$

$S_2$

$R_l$

$S_5$

$S_3$

**Fig. 4B**

$S_4$

**Fig. 5**

401    200    Δ    20

410    402

400

404    403    41

$dt_i$  roue $R_i$

$dt_{imax}$

seuil
d'intervention

0    $t_M$    $t$

**Fig. 8**

**Fig. 3**

**Fig. 6**

## Fig. 4A

## Fig. 7

## RÉFÉRENCES CITÉES DANS LA DESCRIPTION

**Documents brevets cités dans la description**

- DE 3309908 A